# EUROPEAN PATENT APPLICATION

(11) **EP 4 418 546 A1**
(43) Date of publication of application: **21.08.2024**
(21) Application number: 22882890.1
(22) Date of filing: 19.10.2022
(51) Int. Cl.: H04B 3/54

(54) **COMMUNICATION METHOD AND APPARATUS**

(30) Priority: 22.10.2021 CN 202111234064
(71) Applicant: Huawei Technologies Co., Ltd., Shenzhen, Guangdong 518129 (CN)
(72) Inventor: SUN, Huan, Shenzhen, Guangdong 518129 (CN); BI, Xiaoyan, Shenzhen, Guangdong 518129 (CN); JIN, Shi, Nanjing, Jiangsu 210096 (CN); LI, Shazhiyuan, Nanjing, Jiangsu 210096 (CN)
(74) Representative: Pfenning, Meinig & Partner mbB
(86) International application number: PCT/CN2022/126114
(87) International publication number: WO 2023/066285

(57) **Abstract**

Embodiments of this application provide a communication method and apparatus. The method includes: A transmitter performs at least one of the following: determining a first transmission scheme based on first information, and determining a first pilot configuration scheme based on second information, where each of the first information and the second information includes analog-to-digital converter ADC precision of a receiver; the transmitter sends configuration information, where the configuration information includes at least one of a configuration corresponding to the first transmission scheme and a configuration corresponding to the first pilot configuration scheme, and the configuration information is used to determine at least one of a second transmission scheme and a second pilot configuration scheme; and the transmitter obtains at least one of the second transmission scheme and the second pilot configuration scheme, where the at least one of the second transmission scheme and the second pilot configuration scheme is a scheme fed back by the receiver to the transmitter or configured by the receiver for the receiver by the transmitter. According to embodiments of this application, efficient data transmission between ADC devices with different precision can be implemented.

## Description

This application claims priority to Chinese Patent Application No. 202111234064.4, filed with the China National Intellectual Property Administration on October 22, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, while high-performance and high-reliability transmission is implemented in a wireless communication system, a higher requirement is imposed on reducing device power consumption and reducing hardware costs. Low-precision analog-to-digital converter (analog-to-digital converter, ADC) is a potential technology that can significantly reduce the device power consumption and hardware costs.

However, a system with a low-precision ADC still faces some important challenges: Strong nonlinear distortion is introduced when ultra-low precision quantization is performed in a wireless communication system. For example, after a low-bit ADC is introduced into an orthogonal frequency division multiplexing (orthogonal frequency division multiplexing, OFDM) system, orthogonality between OFDM subcarrier observation samples is severely damaged by low-precision quantization, a conventional signal reconstruction algorithm is no longer applicable, and a pilot insertion method also needs to be improved. In addition to stronger nonlinear distortion, in a system architecture in which a unified low-precision ADC is configured, channel estimation performance is poorer, algorithm running time is longer, and a system transmission delay is affected. In addition, the system in which the unified low-precision ADC is configured is not universally applicable, and is not applicable to data transmission between ADC devices with different precision.

### SUMMARY

Embodiments of this application disclose a communication method and apparatus, to implement efficient data transmission between ADC devices with different precision.

According to a first aspect, an embodiment of this application discloses a communication method, including:

A transmitter performs at least one of the following: determining a first transmission scheme based on first information, and determining a first pilot configuration scheme based on second information, where the first transmission scheme includes a modulation and coding scheme, the first pilot configuration scheme includes a pilot length and a pilot sequence, and each of the first information and the second information includes analog-to-digital converter ADC precision of a receiver.

The transmitter sends configuration information, where the configuration information includes at least one of a configuration corresponding to the first transmission scheme and a configuration corresponding to the first pilot configuration scheme, and the configuration information is used to determine at least one of a second transmission scheme and a second pilot configuration scheme.

The transmitter obtains the at least one of the second transmission scheme and the second pilot configuration scheme.

According to the foregoing method, the first transmission scheme is determined based on the first information, the first pilot configuration scheme is determined based on the second information, and each of the first information and the second information includes the ADC precision of the receiver. In this way, when the transmission scheme and the pilot configuration scheme are designed, the ADC precision of the receiver in a system is fully considered. Therefore, transmission performance of the system is improved, the system is universally applicable, and efficient data transmission between transmitters with ADCs with different precision and receivers with ADCs with different precision is supported.

In a possible implementation, the method further includes: sending, by the transmitter, first data based on at least one of the first transmission scheme and the first pilot configuration scheme.

In another possible implementation, the method further includes: sending, by the transmitter, second data based on the at least one of the second transmission scheme and the second pilot configuration scheme.

In still another possible implementation, the method further includes: when a quantity of scheduled receivers does not change or the ADC precision of the receiver does not change, sending, by the transmitter, the first data based on the at least one of the second transmission scheme and the second pilot configuration scheme.

In still another possible implementation, the first information includes at least one of a predefined pilot configuration scheme, channel information, and a performance requirement of the receiver.

In still another possible implementation, the second information includes at least one of a predefined transmission scheme, the channel information, and the performance requirement of the receiver.

According to a second aspect, an embodiment of this application discloses a communication method, including:

A receiver obtains configuration information, where the configuration information includes at least one of a configuration corresponding to a first transmission scheme and a configuration corresponding to a first pilot configuration scheme, where the first transmission scheme is determined based on first information, the first pilot configuration scheme is determined based on second information, the first transmission scheme includes a modulation and coding scheme, the first pilot configuration scheme includes a pilot length and a pilot sequence, and each of the first information and the second information includes analog-to-digital converter ADC precision of the receiver.

The receiver determines, based on the configuration information, at least one of a second transmission scheme and a second pilot configuration scheme.

The receiver sends the at least one of the second transmission scheme and the second pilot configuration scheme, where the at least one of the second transmission scheme and the second pilot configuration scheme is a scheme fed back by the receiver to a transmitter or configured by the receiver for a transmitter.

According to the foregoing method, the first transmission scheme is determined based on the first information, the first pilot configuration scheme is determined based on the second information, and each of the first information and the second information includes the ADC precision of the receiver. In this way, when the transmission scheme and the pilot configuration scheme are designed, the ADC precision of the receiver in a system is fully considered. Therefore, transmission performance of the system is improved, the system is universally applicable, and efficient data transmission between transmitters with ADCs with different precision and receivers with ADCs with different precision is supported.

In a possible implementation, the first information includes at least one of a predefined pilot configuration scheme, channel information, and a performance requirement of the receiver.

In another possible implementation, the second information includes at least one of a predefined transmission scheme, the channel information, and the performance requirement of the receiver.

In still another possible implementation, the determining, by the receiver based on the configuration information, at least one of a second transmission scheme and a second pilot configuration scheme includes: determining, by the receiver based on the configuration information and the channel information, the at least one of the second transmission scheme and the second pilot configuration scheme.

In still another possible implementation, the method further includes: obtaining, by the receiver, first data based on at least one of the first transmission scheme and the first pilot configuration scheme.

In still another possible implementation, the method further includes: obtaining, by the receiver, second data based on the at least one of the second transmission scheme and the second pilot configuration scheme.

In still another possible implementation, the method further includes: determining a mean square error of channel estimation; and determining whether the mean square error of channel estimation meets a preset threshold.

In still another possible implementation, when it is determined that the mean square error of channel estimation is less than the preset threshold, a pilot length corresponding to the second pilot configuration scheme is less than or equal to the pilot length corresponding to the first pilot configuration scheme; or when it is determined that the mean square error of channel estimation is greater than the preset threshold, a pilot length corresponding to the second pilot configuration scheme is greater than the pilot length corresponding to the first pilot configuration scheme.

According to the foregoing method, system performance can be improved by using the foregoing feedback mechanism.

According to a third aspect, an embodiment of this application discloses a communication apparatus, including a processing unit and a communication unit.

The processing unit is configured to perform at least one of the following: determining a first transmission scheme based on first information, and determining a first pilot configuration scheme based on second information, where the first transmission scheme includes a modulation and coding scheme, the first pilot configuration scheme includes a pilot length and a pilot sequence, and each of the first information and the second information includes analog-to-digital converter ADC precision of a receiver.

The communication unit is configured to send configuration information, where the configuration information includes at least one of a configuration corresponding to the first transmission scheme and a configuration corresponding to the first pilot configuration scheme, and the configuration information is used to determine at least one of a second transmission scheme and a second pilot configuration scheme.

The communication unit is configured to obtain the at least one of the second transmission scheme and the second pilot configuration scheme.

In a possible implementation, the communication unit is further configured to send first data based on at least one of the first transmission scheme and the first pilot configuration scheme.

In another possible implementation, the communication unit is further configured to send second data based on the at least one of the second transmission scheme and the second pilot configuration scheme.

In still another possible implementation, the communication unit is further configured to: when a quantity of scheduled receivers does not change or the ADC precision of the receiver does not change, send the first data based on the at least one of the second transmission scheme and the second pilot configuration scheme.

In still another possible implementation, the first information includes at least one of a predefined pilot configuration scheme, channel information, and a performance requirement of the receiver.

In still another possible implementation, the second information includes at least one of a predefined transmission scheme, the channel information, and the performance requirement of the receiver.

For technical effects brought by the third aspect or the possible implementations, refer to the descriptions of the technical effects brought by the first aspect or the corresponding implementations.

According to a fourth aspect, an embodiment of this application discloses a communication apparatus, including a processing unit and a communication unit.

The communication unit is configured to obtain configuration information, where the configuration information includes at least one of a configuration corresponding to a first transmission scheme and a configuration corresponding to a first pilot configuration scheme, where the first transmission scheme is determined based on first information, the first pilot configuration scheme is determined based on second information, the first transmission scheme includes a modulation and coding scheme, the first pilot configuration scheme includes a pilot length and a pilot sequence, and each of the first information and the second information includes analog-to-digital converter ADC precision of the apparatus.

The processing unit is configured to determine, based on the configuration information, at least one of a second transmission scheme and a second pilot configuration scheme.

The communication unit is configured to send the at least one of the second transmission scheme and the second pilot configuration scheme, where the at least one of the second transmission scheme and the second pilot configuration scheme is a scheme fed back by the apparatus to a transmitter or configured by the apparatus for a transmitter.

In a possible implementation, the first information includes at least one of a predefined pilot configuration scheme, channel information, and a performance requirement of the apparatus.

In another possible implementation, the second information includes at least one of a predefined transmission scheme, the channel information, and the performance requirement of the apparatus.

In still another possible implementation, the processing unit is configured to determine, based on the configuration information and the channel information, the at least one of the second transmission scheme and the second pilot configuration scheme.

In still another possible implementation, the communication unit is further configured to obtain first data based on at least one of the first transmission scheme and the first pilot configuration scheme.

In still another possible implementation, the communication unit is further configured to obtain second data based on the at least one of the second transmission scheme and the second pilot configuration scheme.

In still another possible implementation, the processing unit is further configured to determine a mean square error of channel estimation; and the processing unit is further configured to determine whether the mean square error of channel estimation meets a preset threshold.

In still another possible implementation, when it is determined that the mean square error of channel estimation is less than the preset threshold, a pilot length corresponding to the second pilot configuration scheme is less than or equal to the pilot length corresponding to the first pilot configuration scheme; or when it is determined that the mean square error of channel estimation is greater than the preset threshold, a pilot length corresponding to the second pilot configuration scheme is greater than the pilot length corresponding to the first pilot configuration scheme.

For technical effects brought by the fourth aspect or the possible implementations, refer to the descriptions of the technical effects brought by the second aspect or the corresponding implementations.

According to a fifth aspect, an embodiment of this application discloses a communication apparatus, where the apparatus includes at least one processor and a communication interface, and the at least one processor is configured to invoke a computer program stored in at least one memory, to perform the following operations:
performing at least one of the following: determining a first transmission scheme based on first information, and determining a first pilot configuration scheme based on second information, where the first transmission scheme includes a modulation and coding scheme, the first pilot configuration scheme includes a pilot length and a pilot sequence, and each of the first information and the second information includes analog-to-digital converter ADC precision of a receiver;
sending configuration information through the communication interface, where the configuration information includes at least one of a configuration corresponding to the first transmission scheme and a configuration corresponding to the first pilot configuration scheme, and the configuration information is used to determine at least one of a second transmission scheme and a second pilot configuration scheme; and
obtaining the at least one of the second transmission scheme and the second pilot configuration scheme.

In a possible implementation, the processor is configured to send, through the communication interface, first data based on at least one of the first transmission scheme and the first pilot configuration scheme.

In another possible implementation, the processor is configured to send, through the communication interface, second data based on the at least one of the second transmission scheme and the second pilot configuration scheme.

In still another possible implementation, the processor is configured to: when a quantity of scheduled receivers does not change or the ADC precision of the receiver does not change, send, through the communication interface, the first data based on the at least one of the second transmission scheme and the second pilot configuration scheme.

In still another possible implementation, the first information includes at least one of a predefined pilot configuration scheme, channel information, and a performance requirement of the receiver.

In still another possible implementation, the second information includes at least one of a predefined transmission scheme, the channel information, and the performance requirement of the receiver.

For technical effects brought by the fifth aspect or the possible implementations, refer to the descriptions of the technical effects brought by the first aspect or the corresponding implementations.

According to a sixth aspect, an embodiment of this application discloses a communication apparatus, where the apparatus includes at least one processor and a communication interface, and the at least one processor is configured to invoke a computer program stored in at least one memory, to perform the following operations:
obtaining configuration information, where the configuration information includes at least one of a configuration corresponding to a first transmission scheme and a configuration corresponding to a first pilot configuration scheme, where the first transmission scheme is determined based on first information, the first pilot configuration scheme is determined based on second information, the first transmission scheme includes a modulation and coding scheme, the first pilot configuration scheme includes a pilot length and a pilot sequence, and each of the first information and the second information includes analog-to-digital converter ADC precision of the apparatus;
determining, based on the configuration information, at least one of a second transmission scheme and a second pilot configuration scheme; and
sending, through the communication interface, the at least one of the second transmission scheme and the second pilot configuration scheme, where the at least one of the second transmission scheme and the second pilot configuration scheme is a scheme fed back by the apparatus to a transmitter or configured by the apparatus for a transmitter.

In a possible implementation, the first information includes at least one of a predefined pilot configuration scheme, channel information, and a performance requirement of the apparatus.

In another possible implementation, the second information includes at least one of a predefined transmission scheme, the channel information, and the performance requirement of the apparatus.

In still another possible implementation, the processor is configured to determine, based on the configuration information and the channel information, the at least one of the second transmission scheme and the second pilot configuration scheme.

In still another possible implementation, the processor is further configured to obtain first data based on at least one of the first transmission scheme and the first pilot configuration scheme.

In still another possible implementation, the processor is further configured to obtain second data based on the at least one of the second transmission scheme and the second pilot configuration scheme.

In still another possible implementation, the processor is further configured to: determine a mean square error of channel estimation; and determine whether the mean square error of channel estimation meets a preset threshold.

In still another possible implementation, when it is determined that the mean square error of channel estimation is less than the preset threshold, a pilot length corresponding to the second pilot configuration scheme is less than or equal to the pilot length corresponding to the first pilot configuration scheme; or when it is determined that the mean square error of channel estimation is greater than the preset threshold, a pilot length corresponding to the second pilot configuration scheme is greater than the pilot length corresponding to the first pilot configuration scheme.

For technical effects brought by the sixth aspect or the possible implementations, refer to the descriptions of the technical effects brought by the second aspect or the corresponding implementations.

According to a seventh aspect, an embodiment of this application discloses a chip system, where the chip system includes a logic circuit and an input/output interface, and the logic circuit is configured to execute a computer program or instructions, to implement the method according to any one of the foregoing aspects.

According to an eighth aspect, an embodiment of this application discloses a computer-readable storage medium, where the computer-readable storage medium stores computer instructions, and when the computer instructions are run on a processor, the method according to any one of the foregoing aspects is implemented.

According to a ninth aspect, an embodiment of this application discloses a computer program product, where the computer program product includes computer program code, and when the computer program code is run on a computer, the method according to any one of the foregoing aspects is implemented.

### BRIEF DESCRIPTION OF DRAWINGS

The following describes the accompanying drawings used in embodiments of this application.
FIG. 1 is a schematic diagram of a structure of a communication system according to an embodiment of this application;
FIG. 2 is a working flowchart of an OFDM system with a low-precision ADC according to an embodiment of this application;
FIG. 3 is a flowchart of a communication method according to an embodiment of this application;
FIG. 4 is a schematic diagram of receiving performance analysis of receivers with ADCs with different quantization precision in a same transmission scheme according to an embodiment of this application;
FIG. 5 is a schematic diagram of performance analysis of a receiver in different pilot configuration schemes according to an embodiment of this application;
FIG. 6 is a flowchart of a communication method according to an embodiment of this application;
FIG. 7 is a schematic diagram of a structure of a communication apparatus according to an embodiment of this application;
FIG. 8 is a schematic diagram of a structure of a communication apparatus according to an embodiment of this application; and
FIG. 9 is a schematic diagram of a structure of a chip system according to an embodiment of this application.

### DESCRIPTION OF EMBODIMENTS

The following describes embodiments of this application with reference to the accompanying drawings in embodiments of this application.

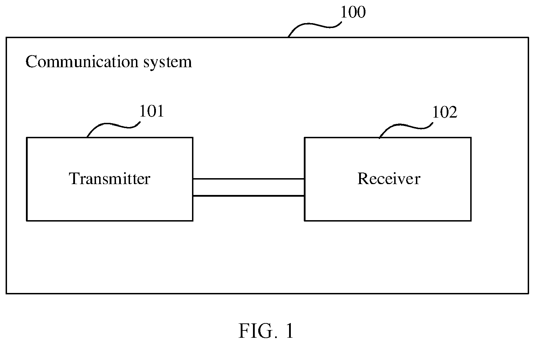

FIG. 1 is a schematic diagram of a structure of a communication system 100 according to an embodiment of this application. The communication system 100 includes a transmitter 101 and a receiver 102. The transmitter 101 may be configured with a high-precision digital-to-analog converter (analog-to-digital converter, ADC) antenna array, or may be configured with a low-precision ADC antenna array, or may be configured with a hybrid-precision ADC antenna array. The receiver 102 may be configured with a high-precision ADC antenna array, or may be configured with a low-precision ADC antenna array, or may be configured with a hybrid-precision ADC antenna array. Correspondingly, it may be considered that a high-precision ADC antenna array, a low-precision ADC antenna array, or a hybrid-precision ADC antenna array is used in the communication system 100.

When the transmitter 101 is a network device, correspondingly, the receiver 102 may be a terminal device. In a downlink, a plurality of transmit antennas may be configured for the network device. Each transmit antenna may be configured with a high-precision digital-to-analog converter (digital to analog converter, DAC). The network device may serve one or more terminal devices. Each terminal device is configured with an ADC with different precision. Alternatively, the terminal device may select a high-precision or low-precision ADC based on a service requirement for receiving downlink data. For example, a high-precision ADC, for example, an 8-bit ADC, is configured for a terminal device 1; or a low-precision ADC, for example, a 1-bit ADC, may alternatively be configured for the terminal device 1. In the downlink, a specific implementation process is as follows: The network device performs at least one of the following: determining a first transmission scheme based on first information, and determining a second transmission scheme based on second information, where each of the first information and the second information includes ADC precision of the terminal device; and then the network device sends configuration information to the terminal device, where the configuration information includes at least one of a configuration corresponding to the first transmission scheme and a configuration corresponding to the first pilot configuration scheme. Correspondingly, the terminal device receives the configuration information, and then determines whether a mean square error of channel estimation meets a preset threshold, that is, determines whether the mean square error of channel estimation meets a system requirement. Then, the terminal device determines, based on the configuration information and downlink channel information, at least one of a second transmission scheme and a second pilot configuration scheme. When the terminal device determines that the mean square error of channel estimation is less than or equal to the preset threshold, a pilot length corresponding to the second pilot configuration scheme is less than or equal to a pilot length corresponding to the first pilot configuration scheme. In this case, the terminal device may provide feedbacks, to the network device, that the pilot length is reduced or maintained, or the terminal device may send the second pilot configuration scheme to the network device.

When the transmitter 101 is a terminal device, correspondingly, the receiver 102 may be a network device. In an uplink, a high-precision or low-precision digital-to-analog converter (digital-to-analog converter, DAC) is configured for transmit antennas of different terminal devices, and a receive antenna of the network device may be connected to a high-precision or low-precision ADC module for receiving uplink data. The network device may serve one or more terminal devices. In the uplink, a specific implementation process is as follows: The terminal device performs at least one of the following: determining a first transmission scheme based on first information, and determining a second transmission scheme based on second information, where each of the first information and the second information includes ADC precision of the terminal device; and then sending configuration information to the network device, where the configuration information includes at least one of a configuration corresponding to the first transmission scheme and a configuration corresponding to the first pilot configuration scheme. Correspondingly, the network device receives the configuration information, and then determines whether a mean square error of channel estimation meets a preset threshold, that is, determines whether the mean square error of channel estimation meets a system requirement. Then, the network device determines, based on the configuration information and uplink channel information, at least one of a second transmission scheme and a second pilot configuration scheme. When the network device determines that the mean square error of channel estimation is less than or equal to the preset threshold, a pilot length corresponding to the second pilot configuration scheme is less than or equal to a pilot length corresponding to the first pilot configuration scheme.

The method in embodiments of this application may be used in the communication system 100 shown in FIG. 1.

The communication system 100 may be a long-term evolution (long-term evolution, LTE) system that supports a fourth generation (fourth generation, 4G) access technology, a new radio (new radio, NR) system that supports a fifth generation (fifth generation, 5G) access technology, or a new radio vehicle-to-everything (vehicle-to-everything, NR V2X) system. The communication system may be used in a system in hybrid networking of LTE and 5G, a device-to-device (device-to-device, D2D) communication system, a machine-to-machine (machine-to-machine, M2M) communication system, internet of things (Internet of Things, IoT), an unmanned aerial vehicle communication system, a communication system that supports a plurality of wireless technologies, for example, an LTE technology and an NR technology, or a non-terrestrial communication system, for example, a satellite communication system or a high-altitude platform station. In addition, optionally, the communication system may be used in a narrowband internet of things (NarrowBand-Internet of Things, NB-IoT) system, an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access, CDMA 2000) system, a time division-synchronous code division multiple access (Time Division-Synchronous Code Division Multiple Access, TD-SCDMA) system, a long-term evolution (Long-Term Evolution, LTE) system, and a future-oriented communication technology.

(1) The terminal device includes user equipment (user equipment, UE) and includes a device providing voice and/or data connectivity for a user, and specifically, includes a device providing voice for a user, a device providing data connectivity for a user, or a device providing voice and data connectivity for a user. For example, a hand-held device with a wireless connection function or a processing device connected to a wireless modem may be included. The terminal device may communicate with a core network through a radio access network (radio access network, RAN), and exchange voice or data with the RAN, or exchange voice and data with the RAN. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, light user equipment (light UE), reduced capability user equipment (reduced capability UE, REDCAP UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, hand-held, or a computer-embedded mobile apparatus. For example, the terminal device may be a personal communications service (personal communications service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes a barcode scanner, a radio frequency identification (radio frequency identification, RFID) device, a sensor, a global positioning system (global positioning system, GPS) device, a laser scanner, or another information sensing device.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may all be vehicle-mounted terminal devices. For example, the vehicle-mounted terminal device is also referred to as an on-board unit (on-board unit, OBU).

In embodiments of this application, the terminal device may further include a relay (relay). Alternatively, it is understood that any device that can perform data communication with a base station may be considered as the terminal device.

In this embodiment of this application, an apparatus configured to implement a function of the terminal device may be the terminal device, or may be an apparatus, for example, a chip system, that can support the terminal device in implementing the function. The apparatus may be installed in the terminal device. In this embodiment of this application, the chip system may include a chip, or may include a chip and another discrete component. In the technical solutions provided in embodiments of this application, an example in which the apparatus configured to implement the function of the terminal is the terminal device is used for describing the technical solutions provided in embodiments of this application.

(2) The network device includes, for example, an access network (access network, AN) device such as a base station (for example, an access point), and may be a device that communicates with a wireless terminal device through an air interface in one or more cells in an access network. Alternatively, the network device is, for example, a road side unit (road side unit, RSU) in a vehicle-to-everything (vehicle-to-everything, V2X) technology. The base station may be configured to perform mutual conversion between a received over-the-air frame and an IP packet, to serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in a long-term evolution (long-term evolution, LTE) system or a long-term evolution-advanced (long-term evolution-advanced, LTE-A) system, may include a next generation NodeB (next generation NodeB, gNB) in the 5th generation (the 5th generation, 5G) mobile communication technology NR system (also briefly referred to as an NR system), or may include a central unit (centralized unit, CU) and a distributed unit (distributed unit, DU) in a cloud radio access network (cloud radio access network, Cloud RAN) system. This is not limited in embodiments of this application.

The network device may further include a core network device. The core network device includes, for example, an access and mobility management function (access and mobility management function, AMF), a user plane function (user plane function, UPF), or a session management function (session management function, SMF).

In this embodiment of this application, an apparatus configured to implement a function of the network device may be the network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used for describing the technical solutions provided in embodiments of this application.

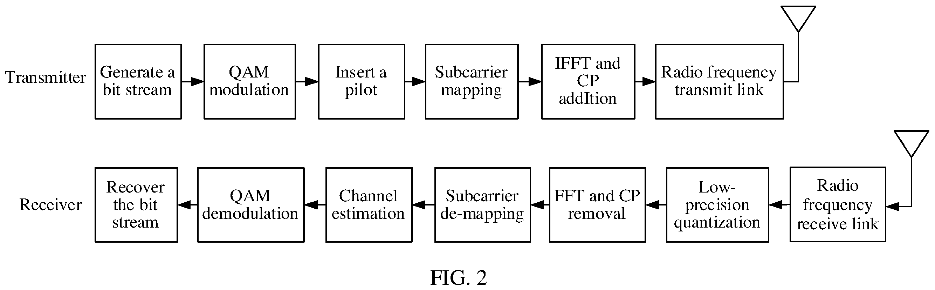

FIG. 2 shows a working process of an OFDM system with a low-precision ADC. A transmitter generates a bit stream, determines a quadrature amplitude modulation (quadrature amplitude modulation, QAM) scheme and a pilot configuration scheme, performs subcarrier mapping, inverse fast Fourier transform (inverse fast Fourier transform, IFFT), and cyclic prefix (cyclic prefix, CP) adding processing, and finally sends a data signal and a pilot signal to a receiver. Correspondingly, after receiving the data signal and the pilot signal, the receiver performs low-precision quantization, fast Fourier transform (fast Fourier transform, FFT), and CP removal, subcarrier de-mapping, channel estimation using a channel estimation algorithm, and final recovery of the bit stream according to the QAM scheme. The pilot configuration scheme is fixed, the QAM scheme is determined based on a modulation and coding scheme (modulation and coding scheme, MCS) table, and a system with a unified low-precision ADC is configured.

After a low-bit ADC is introduced into an OFDM system, orthogonality between OFDM subcarrier observation samples is severely damaged by low-precision quantization, a conventional signal reconstruction algorithm is no longer applicable, and a pilot insertion method also needs to be improved. In addition to stronger nonlinear distortion, in a system architecture in which a unified low-precision ADC is configured, channel estimation performance is poorer, algorithm running time is longer, and a system transmission delay is affected. In addition, the system in which the unified low-precision ADC is configured is not universally applicable, and is not applicable to information transfer and processing between ADC devices with different precision. Therefore, to resolve the foregoing problem, embodiments of this application provide the following solutions.

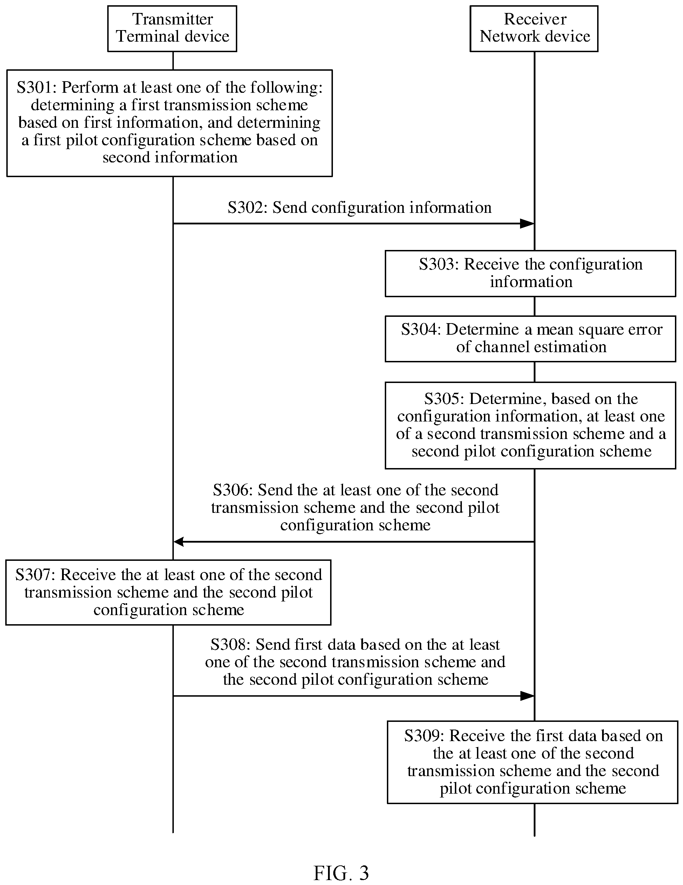

When the transmitter is a terminal device, the receiver is a network device, and uplink communication is performed, refer to FIG. 3. FIG. 3 shows a communication method according to an embodiment of this application. The method includes but is not limited to the following steps.

Step S301: A transmitter performs at least one of the following: determining a first transmission scheme based on first information, and determining a first pilot configuration scheme based on second information.

Specifically, the first transmission scheme includes a modulation and coding scheme, the first pilot configuration scheme includes a pilot length and a pilot sequence, and each of the first information and the second information includes ADC precision of the receiver. The pilot length may be a size or a quantity of resource blocks occupied by the pilot sequence. The ADC precision of the receiver may be precision of an ADC configured on an antenna of the receiver, and a quantity of quantized bits of the ADC of the receiver. The determining a first transmission scheme based on the first information may mean that the transmitter searches a table for the first transmission scheme. The table may be a plurality of first transmission scheme groups designed based on different ADC precision of the receiver.

Specifically, the first information further includes at least one of a predefined pilot configuration scheme, channel information, and a performance requirement of the receiver. The predefined pilot configuration scheme may be a set of a plurality of pilot configuration schemes supported by a resource pool of the transmitter, and different pilot configuration schemes have different pilot lengths or resource mapping manners. For example, the predefined pilot configuration scheme includes a pilot configuration scheme 1 and a pilot configuration scheme 2. In the pilot configuration scheme 1, the pilot length is 3, that is, the pilot sequence occupies three resource blocks. In the pilot configuration scheme 2, the pilot length is 5, that is, the pilot sequence occupies five resource blocks. Downlink channel information in channel information is estimated based on uplink channel information and reciprocity of the channel information. The performance requirement of the receiver may be a bit error rate (bit error rate, BER) of the receiver or a received signal-to-noise ratio (signal-to-noise ratio, SNR) of the receiver.

Specifically, the second information includes at least one of a predefined transmission scheme, the channel information, and the performance requirement of the receiver. The predefined transmission scheme may be a plurality of transmission schemes supported by a resource pool of the transmitter, and different transmission schemes have different modulation and coding schemes. For example, the plurality of transmission schemes supported by the resource pool of the transmitter include a transmission scheme 1 and a transmission scheme 2. The transmission scheme 1 is 16QAM, and the transmission scheme 2 is 4QAM.

Specifically, the transmitter performs at least one of the following: before the first transmission scheme is determined based on the first information and the first pilot configuration scheme is determined based on the second information, the receiver reports device state information to the transmitter. This may also be understood as that the receiver sends ADC precision of the receiver to the transmitter. For example, the receiver includes a device 1 and a device 2. A 2-bit ADC is configured for the device 1, and an 8-bit ADC is configured for the device 2. Then, the device 1 sends 2-bit ADC information to the transmitter, and the device 2 sends 8-bit ADC information to the transmitter.

In an example, it is assumed that the first information includes the predefined pilot configuration scheme, the channel information, the performance requirement of the receiver, and the ADC precision of the receiver; and the transmitter determines the first transmission scheme based on the first information. For example, it is assumed that the predefined pilot configuration scheme includes a pilot configuration scheme 1 and a pilot configuration scheme 2. The pilot configuration scheme 1 means the pilot length is 3 and the pilot configuration scheme 2 means the pilot length is 5. The performance requirement of the receiver is that a bit error rate of the receiver is less than 1%, and the ADC precision of the receiver is 8 bits. Then, the transmitter searches, based on the ADC information of the receiver, a modulation and coding scheme table corresponding to the ADC precision of the receiver being 8 bits. Then, a modulation and coding scheme that meets this requirement is searched for in the modulation and coding scheme table corresponding to 8 bits based on a transmission index whose bit error rate is less than 1%, uplink channel information, and the pilot configuration scheme 2, to determine the first transmission scheme.

In an example, it is assumed that the second information includes the predefined transmission scheme, the channel information, the performance requirement of the receiver, and the ADC precision of the receiver; and the transmitter determines the first pilot configuration scheme based on the second information. For example, it is assumed that the predefined transmission scheme includes a transmission scheme 1 and a transmission scheme 2. The transmission scheme 1 includes 16QAM and the transmission scheme 2 includes 4QAM. The performance requirement of the receiver is that a bit error rate of the receiver is less than 1%, and the ADC precision of the receiver is 8 bits. Then, the transmitter searches, based on the ADC information of the receiver, a modulation and coding scheme table corresponding to the ADC precision of the receiver being 8 bits. Then, based on a requirement of the bit error rate less than 1% and a requirement of the 4QAM (or 16QAM) scheme on a received signal-to-noise ratio, the table is searched for or a preselected candidate pilot configuration scheme set is calculated based on uplink channel information. Finally, the first pilot configuration scheme is selected from the preselected candidate pilot configuration scheme set based on transmission efficiency.

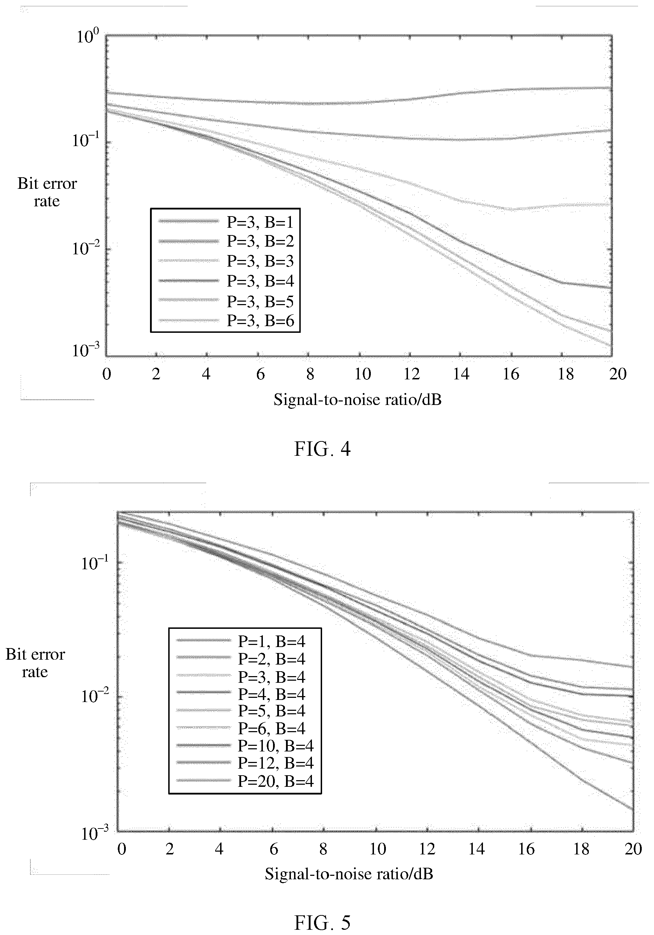

FIG. 4 shows receiving performance analysis of receivers with ADCs with different quantization precision in a same transmission scheme. To be specific, a transmitter determines, based on a specified pilot length, adaptability of different receivers (configured with ADCs with different precision) to a transmission scheme of 16QAM. In FIG. 4, P represents a pilot (Pilot) length configured by a transmitter device, and B represents ADC precision of a receiver, that is, a quantity of quantized bits of an ADC of the receiver. It is determined according to FIG. 4 that performance of different receivers (with different ADC precision) varies greatly in a same pilot length, that is, a pilot length of 3 (P=3) and a same modulation scheme, that is, a modulation scheme of 16QAM; or it may be determined according to FIG. 4 that performance (BER) of different receivers (configured with different pilot configuration schemes) varies greatly in same ADC precision, that is, quantization precision of 4 bits (B=4) and a same modulation scheme (16QAM). Therefore, it is determined according to FIG. 4 that, if a received signal-to-noise ratio (SNR) is specified, when a high-precision ADC is used, that is, a larger quantity of quantized bits of the ADC (a larger B value) is used, bit error performance of the receiver is better, that is, a bit error rate of the receiver is smaller.

FIG. 5 shows performance analysis of a receiver in different pilot configuration schemes. In FIG. 5, P represents a comb structure of a pilot in frequency domain (a larger value of P indicates sparser distribution of resources used for a pilot in frequency domain); and B represents ADC precision of the receiver, that is, a quantity of quantized bits (B=4) of an ADC of the receiver. In FIG. 5, a transmitter uses a 16QAM-based transmission scheme. It is determined according to FIG. 5 that if a spacing of pilots in frequency domain is increased (P is increased), resources occupied by the pilots in system frequency domain are increasingly sparser, that is, system overheads occupied by the pilot are fewer. Alternatively, it may be determined according to FIG. 5 that if a spacing of pilots in frequency domain is increased (P is increased), in a sparse pilot configuration, a larger channel estimation error is caused, a received signal-to-noise ratio of the receiver is reduced, and performance of the receiver is reduced. Therefore, according to FIG. 5, if a received signal-to-noise ratio (SNR) requirement is specified, when the transmitter uses a longer pilot sequence (a smaller P value), bit error performance of the receiver is better, that is, a bit error rate of the receiver is smaller.

Step S302: The transmitter sends configuration information to the receiver.

Specifically, the configuration information includes at least one of a configuration corresponding to the first transmission scheme and a configuration corresponding to the first pilot configuration scheme. The configuration information is used to determine at least one of a second transmission scheme and a second pilot configuration scheme.

Specifically, the transmitter may send a pilot signal to the transmitter according to a configured pilot configuration scheme.

Step S303: The receiver receives the configuration information from the transmitter.

Step S304: The receiver determines a mean square error of channel estimation.

After determining the mean square error of channel estimation, the receiver determines whether the mean square error of channel estimation is less than a preset threshold. The preset threshold may be configured by a system. For example, a normalized error threshold is less than 0.01. That is, the receiver determines whether the mean square error of channel estimation meets a system requirement. When the receiver determines that the mean square error of channel estimation meets the system requirement, the receiver may reduce the pilot length when determining the second pilot configuration scheme based on the configuration information. That is, compared with the pilot length corresponding to the first pilot configuration scheme, a pilot length corresponding to the second pilot configuration scheme is shorter. When the receiver determines that the mean square error of channel estimation does not meet the system requirement, the receiver may increase the pilot length when determining the second pilot configuration scheme based on the configuration information. That is, compared with the pilot length corresponding to the first pilot configuration scheme, a pilot length corresponding to the second pilot configuration scheme is longer.

When the mean square error of channel estimation is less than the preset threshold, the receiver determines, based on the configuration information, the at least one of the second transmission scheme and the second pilot configuration scheme, where the pilot length corresponding to the second pilot configuration scheme is less than the pilot length corresponding to the first pilot configuration scheme; or when the mean square error of channel estimation is greater than the preset threshold, the receiver determines, based on the configuration information, the at least one of the second transmission scheme and the second pilot configuration scheme, where the pilot length corresponding to the second pilot configuration scheme is greater than the pilot length corresponding to the first pilot configuration scheme. For example, in an example, it is assumed that the preset threshold is 0.01, and the pilot length corresponding to the first pilot configuration scheme is 3. The receiver determines that a normalized mean square error of channel estimation is 0.005. Because 0.005 is less than 0.01, the receiver determines the second pilot configuration scheme based on the configuration information, where the pilot length corresponding to the second pilot configuration scheme is less than the pilot length 3 corresponding to the first pilot configuration scheme.

A process in which the receiver determines the mean square error of channel estimation is specifically as follows: The receiver quantizes first data to obtain a quantized signal, and then performs derivation and calculation on the quantized signal according to Bayesian detection and a mean square error state evolution equation of channel estimation that is established according to a message passing algorithm.

Step S305: The receiver determines, based on the configuration information, at least one of a second transmission scheme and a second pilot configuration scheme.

Specifically, the receiver determines, based on the configuration information and uplink channel information, the at least one of the second transmission scheme and the second pilot configuration scheme. A process is as follows: The receiver may determine, based on actually estimated downlink channel information and the first transmission scheme and the first pilot configuration scheme that are in the configuration information, whether there is a redundant pilot resource corresponding to the first pilot configuration scheme or whether the first transmission scheme needs to be changed. If it is determined that there is a redundant pilot resource corresponding to the first pilot configuration scheme, the second transmission scheme may be selected based on the first pilot configuration scheme; or if it is determined that the first transmission scheme does not need to be changed, the second pilot configuration scheme may be selected based on a predefined rule.

Step S306: The receiver sends the at least one of the second transmission scheme and the second pilot configuration scheme to the transmitter.

Specifically, the at least one of the second transmission scheme and the second pilot configuration scheme is a scheme configured by the receiver for the transmitter.

Step S307: The transmitter receives the at least one of the second transmission scheme and the second pilot configuration scheme from the receiver.

The at least one of the second transmission scheme and the second pilot configuration scheme is a scheme configured by the receiver for the transmitter.

Step S308: The transmitter sends the first data to the receiver based on the at least one of the second transmission scheme and the second pilot configuration scheme.

The first data includes a data signal and a pilot signal. In an example, it is assumed that the second transmission scheme is 16QAM, and the second pilot configuration scheme is that a pilot length is 3 and a pilot sequence is a sequence 1. That the transmitter sends the first data to the receiver based on the second transmission scheme and the second pilot configuration scheme may mean that the transmitter frames to-be-transmitted original data based on the second transmission scheme, that is, 16QAM, and sends, based on the second pilot configuration scheme in which the pilot length is 3 and the pilot sequence is the sequence 1, the first data that includes the original data signal and the pilot signal to the receiver.

Step S309: The receiver receives the first data from the transmitter based on the at least one of the second transmission scheme and the second pilot configuration scheme.

In the method shown in FIG. 3, the first transmission scheme is determined based on the first information, the first pilot configuration scheme is determined based on the second information, and each of the first information and the second information includes the ADC precision of the receiver. In this way, when the transmission scheme and the pilot configuration scheme are designed, the ADC precision of the receiver in a system is fully considered. Therefore, transmission performance of the system is improved, the system is universally applicable, and efficient data transmission between transmitters with ADCs with different precision and receivers with ADCs with different precision is supported.

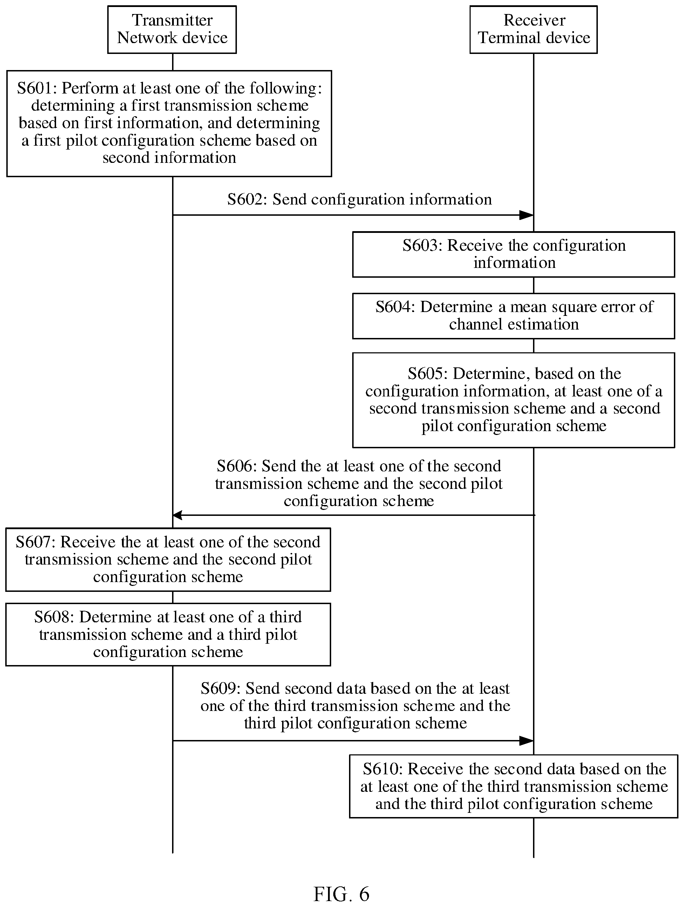

When the transmitter device is a network device, the receiver device is a terminal device, and downlink communication is performed, refer to FIG. 6. FIG. 6 shows a communication method according to an embodiment of this application. The method includes but is not limited to the following steps.

Step S601: A transmitter performs at least one of the following: determining a first transmission scheme based on first information, and determining a first pilot configuration scheme based on second information.

Specifically, the first transmission scheme includes a modulation and coding scheme, the first pilot configuration scheme includes a pilot length and a pilot sequence, and each of the first information and the second information includes ADC precision of the receiver. For details, refer to step S301. Details are not described herein again.

In a possible implementation, the transmitter may send first data to the receiver based on at least one of the first transmission scheme and the first pilot configuration scheme. Correspondingly, the receiver may obtain the first data based on the at least one of the first transmission scheme and the first pilot configuration scheme.

Specifically, the first data includes a data signal and a pilot signal. In an example, it is assumed that the first transmission scheme is 16QAM, and the first pilot configuration scheme is that a pilot length is 3 and a pilot sequence is a sequence 1. That the transmitter sends the first data to the receiver based on the first transmission scheme and the first pilot configuration scheme may mean that the transmitter frames to-be-transmitted original data based on the first transmission scheme, that is, 16QAM, and sends, based on the first pilot configuration scheme in which the pilot length is 3 and the pilot sequence is the sequence 1, the first data that includes the original data signal and the pilot signal to the receiver.

In a possible implementation, the transmitter sends the first data to the receiver based on at least one of the first transmission scheme and the first configuration scheme. Correspondingly, the receiver quantizes the first data, determines whether a channel estimation error is less than a preset threshold, and feeds back evaluation information if the channel estimation error is less than or equal to the preset threshold. The evaluation information may be the second pilot configuration scheme determined by the receiver based on the configuration information, where the length of the second pilot configuration scheme is less than or equal to the length of the first pilot configuration scheme, and the configuration information includes at least one of the configuration corresponding to the first transmission scheme and the configuration corresponding to the first configuration scheme. Certainly, the evaluation information may further indicate to reduce or maintain the pilot length. If the channel estimation error is greater than the preset threshold, the evaluation information is fed back. The evaluation information may be the second pilot configuration scheme determined by the receiver based on the configuration information, where the length of the second pilot configuration scheme is greater than the length of the first pilot configuration scheme. Certainly, the evaluation information may further indicate to increase the pilot length, and the evaluation information may be indication information.

Step S602: The transmitter sends configuration information to the receiver.

Specifically, the configuration information includes at least one of a configuration corresponding to the first transmission scheme and a configuration corresponding to the first pilot configuration scheme. The configuration information is used to determine at least one of a second transmission scheme and a second pilot configuration scheme.

Step S603: The receiver receives the configuration information from the transmitter.

Step S604: The receiver determines a mean square error of channel estimation.

For details, refer to step S304. Details are not described herein again.

Step S605: The receiver determines, based on the configuration information, the at least one of the second transmission scheme and the second pilot configuration scheme.

Specifically, the receiver may determine, based on the configuration information and downlink channel information, the at least one of the second transmission scheme and the second pilot configuration scheme.

For details, refer to step S305. Details are not described herein again.

Step S606: The receiver sends the at least one of the second transmission scheme and the second pilot configuration scheme to the transmitter.

Step S607: The transmitter receives the at least one of the second transmission scheme and the second pilot configuration scheme from the receiver.

The at least one of the second transmission scheme and the second pilot configuration scheme is a scheme recommended by the receiver to the transmitter.

Step S608: The transmitter determines at least one of a third transmission scheme and a third pilot configuration scheme.

That the transmitter determines at least one of a third transmission scheme and a third pilot configuration scheme includes the following two manners: The transmitter uses the at least one of the second transmission scheme and the second pilot configuration scheme that is recommended by the receiver as the at least one of the third transmission scheme and the third pilot configuration scheme. Alternatively, the transmitter performs at least one of the following: generating the third transmission scheme based on the first information, and generating the third pilot configuration scheme based on the second information. Each of the first information and the second information includes the ADC precision of the receiver, the first information includes a predefined pilot configuration scheme, channel information, a performance requirement of the receiver, and the ADC precision of the receiver, and the second information includes a predefined transmission scheme, the channel information, the performance requirement of the receiver, and the ADC precision of the receiver.

When a quantity of scheduled receivers does not change or the ADC precision of the receiver does not change, the second transmission scheme is the third transmission scheme, and the second pilot configuration scheme is the third pilot configuration scheme. That is, a moment at which step S601 is performed is a first moment, and a moment at which step S608 is performed is a second moment. A quantity of receivers scheduled by the transmitter at the second moment does not change compared with a quantity of receivers scheduled by the transmitter at the first moment, or ADC precision of the receiver at the second moment does not change compared with ADC precision of the receiver at the first moment.

In an example, a moment at which step 601 is performed is a first moment. The transmitter schedules one receiver, a device 1, at the first moment. The transmitter determines the at least one of the third transmission scheme and the third pilot configuration scheme at a second moment. The transmitter schedules one receiver, still the device 1, at the second moment. In this case, the transmitter determines at least one of the second transmission scheme as the third transmission scheme and the second pilot configuration scheme as the third pilot configuration scheme.

When a quantity of receivers scheduled by the transmitter changes, the transmitter performs at least one of the following: determining the third transmission scheme based on the first information, and determining the third pilot configuration scheme based on the second information. For details, refer to step S601. Details are not described herein again.

In an example, a moment at which step 601 is performed is a first moment. The transmitter schedules one receiver, a device 1, at the first moment. The transmitter determines the at least one of the third transmission scheme and the third pilot configuration scheme at a second moment. The transmitter schedules two receivers, the device 1 and a device 2, at the second moment. In this case, the transmitter may perform at least one of the following at the second moment: determining a third transmission scheme of the device 1 based on the first information, and determining a third pilot configuration scheme of the device 1 based on the second information. The transmitter may further perform at least one of the following at the second moment: determining a third transmission scheme of the device 2 based on the first information, and determining a third pilot configuration scheme of the device 2 based on the second information. The first information and the second information include ADC precision of the device 1, and the first information and the second information include ADC precision of the device 2.

In a possible implementation, the transmitter sends indication information to the receiver. The indication information indicates the at least one of the third transmission scheme and the third pilot configuration scheme.

Step S609: The transmitter sends second data to the receiver based on the at least one of the third transmission scheme and the third pilot configuration scheme.

The transmitter uses the at least one of the second transmission scheme and the second pilot configuration scheme that is recommended by the receiver as the at least one of the third transmission scheme and the third pilot configuration scheme. That is, when the quantity of receivers scheduled by the transmitter does not change, the second transmission scheme is the third transmission scheme, and the second pilot configuration scheme is the third pilot configuration scheme. In this case, that the transmitter sends the second data to the receiver based on the at least one of the third transmission scheme and the third pilot configuration scheme may be understood as that the transmitter sends the second data to the receiver based on the at least one of the second transmission scheme and the second pilot configuration scheme.

The second data includes a data signal and a pilot signal.

Step S610: The receiver receives the second data from the transmitter based on the at least one of the third transmission scheme and the third pilot configuration scheme.

In the method shown in FIG. 6, the first transmission scheme is determined based on the first information, the first pilot configuration scheme is determined based on the second information, and each of the first information and the second information includes the ADC precision of the receiver. In this way, when the transmission scheme and the pilot configuration scheme are designed, the ADC precision of the receiver in a system is fully considered. Therefore, transmission performance of the system is improved, the system is universally applicable, and efficient data transmission between transmitters with ADCs with different precision and receivers with ADCs with different precision is supported.

The methods in embodiments of this application are described in detail above. Apparatuses in embodiments of this application are provided below.

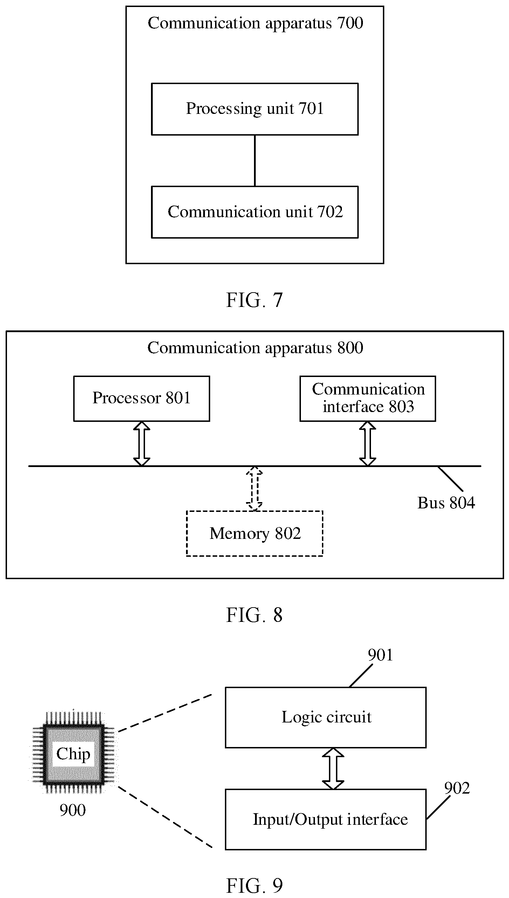

FIG. 7 is a schematic diagram of a structure of a communication apparatus 700 according to an embodiment of this application. The apparatus 700 may include a processing unit 701 and a communication unit 702. Descriptions of the units are described in detail below.

The processing unit 701 is configured to perform at least one of the following: determining a first transmission scheme based on first information, and determining a first pilot configuration scheme based on second information, where the first transmission scheme includes a modulation and coding scheme, the first pilot configuration scheme includes a pilot length and a pilot sequence, and each of the first information and the second information includes analog-to-digital converter ADC precision of a receiver.

The communication unit 702 is configured to send configuration information, where the configuration information includes at least one of a configuration corresponding to the first transmission scheme and a configuration corresponding to the first pilot configuration scheme, and the configuration information is used to determine at least one of a second transmission scheme and a second pilot configuration scheme.

The communication unit 702 is configured to obtain the at least one of the second transmission scheme and the second pilot configuration scheme.

In a possible implementation, the communication unit 702 is further configured to send first data based on at least one of the first transmission scheme and the first pilot configuration scheme.

In another possible implementation, the communication unit 702 is further configured to send second data based on the at least one of the second transmission scheme and the second pilot configuration scheme.

In still another possible implementation, the communication unit 702 is further configured to: when a quantity of scheduled receivers does not change or the ADC precision of the receiver does not change, send the first data based on the at least one of the second transmission scheme and the second pilot configuration scheme.

In still another possible implementation, the first information includes at least one of a predefined pilot configuration scheme, channel information, and a performance requirement of the receiver.

In still another possible implementation, the second information includes at least one of a predefined transmission scheme, the channel information, and the performance requirement of the receiver.

It should be noted that, for implementation and beneficial effects of the units, refer to corresponding descriptions of the method embodiment shown in FIG. 3 or FIG. 4.

FIG. 7 is a schematic diagram of a structure of a communication apparatus 700 according to an embodiment of this application. The apparatus 700 may include a processing unit 701 and a communication unit 702. Descriptions of the units are described in detail below.

The communication unit 702 is configured to obtain configuration information, where the configuration information includes at least one of a configuration corresponding to a first transmission scheme and a configuration corresponding to a first pilot configuration scheme, where the first transmission scheme is determined based on first information, the first pilot configuration scheme is determined based on second information, the first transmission scheme includes a modulation and coding scheme, the first pilot configuration scheme includes a pilot length and a pilot sequence, and each of the first information and the second information includes analog-to-digital converter ADC precision of the apparatus.

The processing unit 701 is configured to determine, based on the configuration information, at least one of a second transmission scheme and a second pilot configuration scheme.

The communication unit 702 is configured to send the at least one of the second transmission scheme and the second pilot configuration scheme, where the at least one of the second transmission scheme and the second pilot configuration scheme is a scheme fed back by the apparatus to a transmitter or configured by the apparatus for a transmitter.

In a possible implementation, the first information includes at least one of a predefined pilot configuration scheme, channel information, and a performance requirement of the apparatus.

In another possible implementation, the second information includes at least one of a predefined transmission scheme, the channel information, and the performance requirement of the apparatus.

In still another possible implementation, the processing unit 701 is configured to determine, based on the configuration information and the channel information, the at least one of the second transmission scheme and the second pilot configuration scheme.

In still another possible implementation, the communication unit 702 is further configured to obtain first data based on at least one of the first transmission scheme and the first pilot configuration scheme.

In still another possible implementation, the communication unit 702 is further configured to obtain second data based on the at least one of the second transmission scheme and the second pilot configuration scheme.

In still another possible implementation, the processing unit 701 is further configured to: determine a mean square error of channel estimation; and determine whether the mean square error of channel estimation meets a preset threshold.

In still another possible implementation, when it is determined that the mean square error of channel estimation is less than the preset threshold, a pilot length corresponding to the second pilot configuration scheme is less than or equal to the pilot length corresponding to the first pilot configuration scheme; or when it is determined that the mean square error of channel estimation is greater than the preset threshold, a pilot length corresponding to the second pilot configuration scheme is greater than the pilot length corresponding to the first pilot configuration scheme.

It should be noted that, for implementation and beneficial effects of the units, refer to corresponding descriptions of the method embodiment shown in FIG. 3 or FIG. 6.

FIG. 8 shows a communication apparatus 800 according to an embodiment of this application. The communication apparatus 800 includes at least one processor 801 and a communication interface 803, and optionally, further includes a memory 802. The processor 801, the memory 802, and the communication interface 803 are connected to each other via a bus 804.

The memory 802 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 802 is configured to store a related computer program and data. The communication interface 803 is configured to send and receive data.

The processor 801 may be one or more central processing units (central processing units, CPUs). When the processor 2801 is one CPU, the CPU may be a single-core CPU or a multicore CPU.

The processor 801 in the communication apparatus 800 is configured to read computer program code stored in the memory 802, to perform the following operations:
performing at least one of the following: determining a first transmission scheme based on first information, and determining a first pilot configuration scheme based on second information, where the first transmission scheme includes a modulation and coding scheme, the first pilot configuration scheme includes a pilot length and a pilot sequence, and each of the first information and the second information includes analog-to-digital converter ADC precision of a receiver;
sending configuration information through the communication interface 803, where the configuration information includes at least one of a configuration corresponding to the first transmission scheme and a configuration corresponding to the first pilot configuration scheme, and the configuration information is used to determine at least one of a second transmission scheme and a second pilot configuration scheme; and
obtaining the at least one of the second transmission scheme and the second pilot configuration scheme.

In a possible implementation, the processor 801 is configured to send, through the communication interface 803, first data based on at least one of the first transmission scheme and the first pilot configuration scheme.

In another possible implementation, the processor 801 is configured to send, through the communication interface 803, second data based on the at least one of the second transmission scheme and the second pilot configuration scheme.

In still another possible implementation, the processor 801 is configured to: when a quantity of scheduled receivers does not change or the ADC precision of the receiver does not change, send, through the communication interface 803, the first data based on the at least one of the second transmission scheme and the second pilot configuration scheme.

In still another possible implementation, the first information includes at least one of a predefined pilot configuration scheme, channel information, and a performance requirement of the receiver.

In still another possible implementation, the second information includes at least one of a predefined transmission scheme, the channel information, and the performance requirement of the receiver.

It should be noted that, for implementation and beneficial effects of the operations, refer to corresponding descriptions of the method embodiment shown in FIG. 3 or FIG. 6.

FIG. 8 shows a communication apparatus 800 according to an embodiment of this application. The communication apparatus 800 includes at least one processor 801 and a communication interface 803, and optionally, further includes a memory 802. The processor 801, the memory 802, and the communication interface 803 are connected to each other via a bus 804.

The memory 802 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 802 is configured to store a related computer program and data. The communication interface 803 is configured to send and receive data.

The processor 801 may be one or more central processing units (central processing units, CPUs). When the processor 2801 is one CPU, the CPU may be a single-core CPU or a multicore CPU.

The processor 801 in the communication apparatus 800 is configured to read computer program code stored in the memory 802, to perform the following operations:
obtaining configuration information, where the configuration information includes at least one of a configuration corresponding to a first transmission scheme and a configuration corresponding to a first pilot configuration scheme, where the first transmission scheme is determined based on first information, the first pilot configuration scheme is determined based on second information, the first transmission scheme includes a modulation and coding scheme, the first pilot configuration scheme includes a pilot length and a pilot sequence, and each of the first information and the second information includes analog-to-digital converter ADC precision of the apparatus;
determining, based on the configuration information, at least one of a second transmission scheme and a second pilot configuration scheme; and
sending, through the communication interface 803, the at least one of the second transmission scheme and the second pilot configuration scheme, where the at least one of the second transmission scheme and the second pilot configuration scheme is a scheme fed back by the apparatus to a transmitter or configured by the apparatus for a transmitter.

In a possible implementation, the first information includes at least one of a predefined pilot configuration scheme, channel information, and a performance requirement of the apparatus.

In another possible implementation, the second information includes at least one of a predefined transmission scheme, the channel information, and the performance requirement of the apparatus.

In still another possible implementation, the processor 801 is configured to determine, based on the configuration information and the channel information, the at least one of the second transmission scheme and the second pilot configuration scheme.

In still another possible implementation, the processor 801 is further configured to obtain first data based on at least one of the first transmission scheme and the first pilot configuration scheme.

In still another possible implementation, the processor 801 is further configured to obtain second data based on the at least one of the second transmission scheme and the second pilot configuration scheme.

In still another possible implementation, the processor 801 is further configured to: determine a mean square error of channel estimation; and determine whether the mean square error of channel estimation meets a preset threshold.

In still another possible implementation, when it is determined that the mean square error of channel estimation is less than the preset threshold, a pilot length corresponding to the second pilot configuration scheme is less than or equal to the pilot length corresponding to the first pilot configuration scheme; or when it is determined that the mean square error of channel estimation is greater than the preset threshold, a pilot length corresponding to the second pilot configuration scheme is greater than the pilot length corresponding to the first pilot configuration scheme.

It should be noted that, for implementation and beneficial effects of the operations, refer to corresponding descriptions of the method embodiment shown in FIG. 3 or FIG. 6.

FIG. 9 shows a chip system 900 according to an embodiment of this application. The chip system 900 includes at least a logic circuit 901 and an input/output interface 902. There may be one or more logic circuits 901, and there may be a plurality of input/output interfaces 902.

The logic circuit 901 is configured to perform at least one of the following: determining a first transmission scheme based on first information, and determining a first pilot configuration scheme based on second information, where the first transmission scheme includes a modulation and coding scheme, the first pilot configuration scheme includes a pilot length and a pilot sequence, and each of the first information and the second information includes analog-to-digital converter ADC precision of a receiver.

The input/output interface 902 is configured to send configuration information, where the configuration information includes at least one of a configuration corresponding to the first transmission scheme and a configuration corresponding to the first pilot configuration scheme, and the configuration information is used to determine at least one of a second transmission scheme and a second pilot configuration scheme.

The logic circuit 901 is configured to obtain the at least one of the second transmission scheme and the second pilot configuration scheme.

In a possible implementation, the input/output interface 902 is further configured to send first data based on at least one of the first transmission scheme and the first pilot configuration scheme.

In another possible implementation, the input/output interface 902 is further configured to send second data based on the at least one of the second transmission scheme and the second pilot configuration scheme.

In still another possible implementation, the input/output interface 902 is further configured to: when a quantity of scheduled receivers does not change or the ADC precision of the receiver does not change, send the first data based on the at least one of the second transmission scheme and the second pilot configuration scheme.

In still another possible implementation, the first information includes at least one of a predefined pilot configuration scheme, channel information, and a performance requirement of the receiver.

In still another possible implementation, the second information includes at least one of a predefined transmission scheme, the channel information, and the performance requirement of the receiver.

It should be noted that, for implementation and beneficial effects of the operations, refer to corresponding descriptions of the method embodiment shown in FIG. 3 or FIG. 6.

FIG. 9 shows a chip system 900 according to an embodiment of this application. The chip system 900 includes at least a logic circuit 901 and an input/output interface 902. There may be one or more logic circuits 901, and there may be a plurality of input/output interfaces 902.

The input/output interface 902 is configured to obtain configuration information, where the configuration information includes at least one of a configuration corresponding to a first transmission scheme and a configuration corresponding to a first pilot configuration scheme, where the first transmission scheme is determined based on first information, the first pilot configuration scheme is determined based on second information, the first transmission scheme includes a modulation and coding scheme, the first pilot configuration scheme includes a pilot length and a pilot sequence, and each of the first information and the second information includes analog-to-digital converter ADC precision of the apparatus.

The logic circuit 901 is configured to determine, based on the configuration information, at least one of a second transmission scheme and a second pilot configuration scheme.

The input/output interface 902 is configured to send the at least one of the second transmission scheme and the second pilot configuration scheme, where the at least one of the second transmission scheme and the second pilot configuration scheme is a scheme fed back by the apparatus to a transmitter or configured by the apparatus for a transmitter.

In a possible implementation, the first information includes at least one of a predefined pilot configuration scheme, channel information, and a performance requirement of the apparatus.

In another possible implementation, the second information includes at least one of a predefined transmission scheme, the channel information, and the performance requirement of the apparatus.

In still another possible implementation, the logic circuit 901 is configured to determine, based on the configuration information and the channel information, the at least one of the second transmission scheme and the second pilot configuration scheme.

In still another possible implementation, the input/output interface 902 is further configured to obtain first data based on at least one of the first transmission scheme and the first pilot configuration scheme.

In still another possible implementation, the input/output interface 902 is further configured to obtain second data based on the at least one of the second transmission scheme and the second pilot configuration scheme.

In still another possible implementation, the logic circuit 901 is further configured to: determine a mean square error of channel estimation; and determine whether the mean square error of channel estimation meets a preset threshold.

In still another possible implementation, when it is determined that the mean square error of channel estimation is less than the preset threshold, a pilot length corresponding to the second pilot configuration scheme is less than or equal to the pilot length corresponding to the first pilot configuration scheme; or when it is determined that the mean square error of channel estimation is greater than the preset threshold, a pilot length corresponding to the second pilot configuration scheme is greater than the pilot length corresponding to the first pilot configuration scheme.

It should be noted that, for implementation and beneficial effects of the operations, refer to corresponding descriptions of the method embodiment shown in FIG. 3 or FIG. 6.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor or the like.

The method steps in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write the information into the storage medium. Certainly, the storage medium may be a component of the processor. The processor and the storage medium may be disposed in an ASIC. In addition, the ASIC may be located in a base station or a terminal. Certainly, the processor and the storage medium may alternatively exist in a base station or a terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs and instructions. When the computer programs or instructions are loaded and executed on a computer, the procedure or functions according to embodiments of this application are all or partially generated. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible to a computer, or a data storage device, such as a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A communication method, comprising:
performing, by a transmitter, at least one of the following: determining a first transmission scheme based on first information, and determining a first pilot configuration scheme based on second information, wherein the first transmission scheme comprises a modulation and coding scheme, the first pilot configuration scheme comprises a pilot length and a pilot sequence, and each of the first information and the second information comprises analog-to-digital converter ADC precision of a receiver;
sending, by the transmitter, configuration information, wherein the configuration information comprises at least one of a configuration corresponding to the first transmission scheme and a configuration corresponding to the first pilot configuration scheme, and the configuration information is used to determine at least one of a second transmission scheme and a second pilot configuration scheme; and
obtaining, by the transmitter, the at least one of the second transmission scheme and the second pilot configuration scheme.

2. The method according to claim 1, wherein the method further comprises:
sending, by the transmitter, first data based on at least one of the first transmission scheme and the first pilot configuration scheme.

3. The method according to claim 1 or 2, wherein the method further comprises:
sending, by the transmitter, second data based on the at least one of the second transmission scheme and the second pilot configuration scheme.

4. The method according to claim 3, wherein the method further comprises:
when a quantity of scheduled receivers does not change or the ADC precision of the receiver does not change, sending, by the transmitter, the first data based on the at least one of the second transmission scheme and the second pilot configuration scheme.

5. The method according to any one of claims 1 to 4, wherein the first information comprises at least one of a predefined pilot configuration scheme, channel information, and a performance requirement of the receiver.

6. The method according to any one of claims 1 to 5, wherein the second information comprises at least one of a predefined transmission scheme, the channel information, and the performance requirement of the receiver.

7. A communication method, comprising:
obtaining, by a receiver, configuration information, wherein the configuration information comprises at least one of a configuration corresponding to a first transmission scheme and a configuration corresponding to a first pilot configuration scheme, wherein the first transmission scheme is determined based on first information, the first pilot configuration scheme is determined based on second information, the first transmission scheme comprises a modulation and coding scheme, the first pilot configuration scheme comprises a pilot length and a pilot sequence, and each of the first information and the second information comprises analog-to-digital converter ADC precision of the receiver;
determining, by the receiver based on the configuration information, at least one of a second transmission scheme and a second pilot configuration scheme; and
sending, by the receiver, the at least one of the second transmission scheme and the second pilot configuration scheme, wherein the at least one of the second transmission scheme and the second pilot configuration scheme is a scheme fed back by the receiver to a transmitter or configured by the receiver for a transmitter.

8. The method according to claim 7, wherein the first information comprises at least one of a predefined pilot configuration scheme, channel information, and a performance requirement of the receiver.

9. The method according to claim 7 or 8, wherein the second information comprises at least one of a predefined transmission scheme, the channel information, and the performance requirement of the receiver.

10. The method according to any one of claims 7 to 9, wherein the determining, by the receiver based on the configuration information, at least one of a second transmission scheme and a second pilot configuration scheme comprises:
determining, by the receiver based on the configuration information and the channel information, the at least one of the second transmission scheme and the second pilot configuration scheme.

11. The method according to any one of claims 7 to 10, wherein the method further comprises:
obtaining, by the receiver, first data based on at least one of the first transmission scheme and the first pilot configuration scheme.

12. The method according to any one of claims 7 to 11, wherein the method further comprises:
obtaining, by the receiver, second data based on the at least one of the second transmission scheme and the second pilot configuration scheme.

13. The method according to any one of claims 7 to 12, wherein the method further comprises:
determining a mean square error of channel estimation; and
determining whether the mean square error of channel estimation meets a preset threshold.

14. The method according to claim 13, wherein
when it is determined that the mean square error of channel estimation is less than the preset threshold, a pilot length corresponding to the second pilot configuration scheme is less than or equal to the pilot length corresponding to the first pilot configuration scheme; or
when it is determined that the mean square error of channel estimation is greater than the preset threshold, a pilot length corresponding to the second pilot configuration scheme is greater than the pilot length corresponding to the first pilot configuration scheme.

15. A communication apparatus, comprising a processing unit and a communication unit, wherein
the processing unit is configured to perform at least one of the following: determining a first transmission scheme based on first information, and determining a first pilot configuration scheme based on second information, wherein the first transmission scheme comprises a modulation and coding scheme, the first pilot configuration scheme comprises a pilot length and a pilot sequence, and each of the first information and the second information comprises analog-to-digital converter ADC precision of a receiver;
the communication unit is configured to send configuration information, wherein the configuration information comprises at least one of a configuration corresponding to the first transmission scheme and a configuration corresponding to the first pilot configuration scheme, and the configuration information is used to determine at least one of a second transmission scheme and a second pilot configuration scheme; and
the communication unit is configured to obtain the at least one of the second transmission scheme and the second pilot configuration scheme.

16. The apparatus according to claim 15, wherein
the communication unit is further configured to send first data based on at least one of the first transmission scheme and the first pilot configuration scheme.

17. The apparatus according to claim 15 or 16, wherein
the communication unit is further configured to send second data based on the at least one of the second transmission scheme and the second pilot configuration scheme.

18. The apparatus according to claim 17, wherein
the communication unit is further configured to: when a quantity of scheduled receivers does not change or the ADC precision of the receiver does not change, send the first data based on the at least one of the second transmission scheme and the second pilot configuration scheme.

19. The apparatus according to any one of claims 15 to 18, wherein the first information comprises at least one of a predefined pilot configuration scheme, channel information, and a performance requirement of the receiver.

20. The apparatus according to any one of claims 15 to 19, wherein the second information comprises at least one of a predefined transmission scheme, the channel information, and the performance requirement of the receiver.

21. A communication apparatus, comprising a processing unit and a communication unit, wherein
the communication unit is configured to obtain configuration information, wherein the configuration information comprises at least one of a configuration corresponding to a first transmission scheme and a configuration corresponding to a first pilot configuration scheme, wherein the first transmission scheme is determined based on first information, the first pilot configuration scheme is determined based on second information, the first transmission scheme comprises a modulation and coding scheme, the first pilot configuration scheme comprises a pilot length and a pilot sequence, and each of the first information and the second information comprises analog-to-digital converter ADC precision of the apparatus;
the processing unit is configured to determine, based on the configuration information, at least one of a second transmission scheme and a second pilot configuration scheme; and
the communication unit is configured to send the at least one of the second transmission scheme and the second pilot configuration scheme, wherein the at least one of the second transmission scheme and the second pilot configuration scheme is a scheme fed back by the apparatus to a transmitter or configured by the apparatus for a transmitter.

22. The apparatus according to claim 21, wherein the first information comprises at least one of a predefined pilot configuration scheme, channel information, and a performance requirement of the apparatus.

23. The apparatus according to claim 21 or 22, wherein the second information comprises at least one of a predefined transmission scheme, the channel information, and the performance requirement of the apparatus.

24. The apparatus according to any one of claims 21 to 23, wherein
the processing unit is configured to determine, based on the configuration information and the channel information, the at least one of the second transmission scheme and the second pilot configuration scheme.

25. The apparatus according to any one of claims 21 to 24, wherein
the communication unit is further configured to obtain first data based on at least one of the first transmission scheme and the first pilot configuration scheme.

26. The apparatus according to any one of claims 21 to 25, wherein
the communication unit is further configured to obtain second data based on the at least one of the second transmission scheme and the second pilot configuration scheme.

27. The apparatus according to any one of claims 21 to 26, wherein
the processing unit is further configured to determine a mean square error of channel estimation; and
the processing unit is further configured to determine whether the mean square error of channel estimation meets a preset threshold.

28. The apparatus according to claim 27, wherein
when it is determined that the mean square error of channel estimation is less than the preset threshold, a pilot length corresponding to the second pilot configuration scheme is less than or equal to the pilot length corresponding to the first pilot configuration scheme; or
when it is determined that the mean square error of channel estimation is greater than the preset threshold, a pilot length corresponding to the second pilot configuration scheme is greater than the pilot length corresponding to the first pilot configuration scheme.

29. A communication apparatus, wherein the apparatus comprises at least one processor and a communication interface, and the at least one processor is configured to invoke a computer program stored in at least one memory, so that the apparatus is enabled to implement the method according to any one of claims 1 to 6.

30. A communication apparatus, wherein the apparatus comprises at least one processor and a communication interface, and the at least one processor is configured to invoke a computer program stored in at least one memory, so that the apparatus is enabled to implement the method according to any one of claims 7 to 14.

31. A chip system, wherein the chip system comprises a logic circuit and an input/output interface, and the logic circuit is configured to invoke a computer program stored in at least one memory, to implement the method according to any one of claims 1 to 14.

32. A computer-readable storage medium, wherein the computer-readable storage medium stores program instructions, and when the program instructions are run on a processor, the method according to any one of claims 1 to 14 is implemented.

33. A computer program product, wherein when the computer program product runs on a processor, the method according to any one of claims 1 to 14 is implemented.

34. A communication system, comprising the apparatus according to any one of claims 15 to 20 and the apparatus according to any one of claims 21 to 28.
